# EUROPÄISCHE PATENTSCHRIFT

(11) **EP 3 693 514 B1**
(45) Veröffentlichungstag und Bekanntmachung des Hinweises auf die Patenterteilung: **03.07.2024**
(21) Anmeldenummer: 20154462.4
(22) Anmeldetag: 30.01.2020
(51) Int. Cl.: E02D 3/026, E05C 17/08, E05C 17/22, B60J 5/04

(54) **BODENBEARBEITUNGSMASCHINE**
MACHINE FOR COMPACTING SOIL
MACHINE POUR COMPACTER DES SOLS

(30) Priorität: 07.02.2019 DE 102019102999
(43) Veröffentlichungstag der Anmeldung: 12.08.2020
(73) Patentinhaber: Hamm AG, 95643 Tirschenreuth (DE)
(72) Erfinder: Schabner, Heiko, 95643 Tirschenreuth (DE); Krockauer, Rainer, 95703 Plößberg (DE); Preisinger, Peter, 95643 Tirschenreuth (DE)
(74) Vertreter: Ruttensperger Lachnit Trossin Gomoll

(56) Entgegenhaltungen:
- EP-A1- 2 402 187
- EP-A1- 2 679 729
- EP-A1- 3 468 820
- JP-A- 2004 044 217

## Beschreibung

Die vorliegende Erfindung betrifft eine Bodenbearbeitungsmaschine, wie zum Beispiel Bodenverdichter, welche einen Bedienstand für eine die Bodenbearbeitungsmaschine bedienende Bedienperson aufweist.

Um bei derartigen Bodenbearbeitungsmaschinen Zugang zum Bedienstand zu erhalten, weist dieser zumindest eine, im Allgemeinen an beiden Seiten des Bedienstands bezüglich einer Maschinen-Längsrichtung jeweils eine Bedienstandtür auf, welche zwischen einer Offenstellung und einer Schließstellung verschwenkbar ist und beispielsweise in der Schließstellung durch eine Verriegelungsformation bezüglich eines Türrahmens verriegelt werden kann, insbesondere auch abgesperrt werden kann. Im Arbeitsbetrieb einer derartigen Bodenbearbeitungsmaschine kann es vorteilhaft oder erforderlich sein, dass eine Bedienstandtür geöffnet wird bzw. in der Offenstellung gehalten wird, um einer Bedienperson die Möglichkeit zu geben, aus dem Bedienstand heraus den Seitenbereich der Bodenbearbeitungsmaschine bzw. auch den dort liegenden Bodenbereich besser beobachten zu können. Eine derartige Bodenbearbeitungsmaschine mit einer zwischen einer Offenstellung und einer Schließstellung verschwenkbaren Bedienstandtür ist beispielsweise aus der EP 2 679 729 A1 bekannt.

Bei einer aus der JP 2004 044217 A bekannten Bodenbearbeitungsmaschine ist eine Bedienstand-Tür/Fenster-Einheit zwischen einer Schließstellung und einer Offenstellung verschiebbar. An der sowohl in der Schließstellung, als auch in der Offenstellung dem Bedienstand-Innenraum zugewandten Tür/Fenster-Innenseite der Bedienstand-Tür/Fenster-Einheit ist eine Handgriffformation vorgesehen, vermittels welcher einerseits die die Bedienstand-Tür/Fenster-Einheit in der Offenstellung verriegelnde Fixieranordnung gelöst werden kann und andererseits die BedienstandTür/Fenster-Einheit zwischen der Offenstellung und der Schließstellung verschoben werden kann.

Die EP 2 679 729 A1 offenbart eine Bodenbearbeitungsmaschine gemäß dem Oberbegriff des Anspruchs 1. In Zuordnung zu einer zwischen einer Schließstellung und einer Offenstellung schwenkbaren Bedienstand-Tür/Fenster-Einheit ist ein Verriegelungsmechanismus vorgesehen, mit welchem die Bedienstand-Tür/FensterEinheit in ihrer Schließstellung verriegelt werden kann. An der Innenseite und der Außenseite der Bedienstand-Tür/Fenster-Einheit sind Bedienelemente vorgesehen, durch welche der Verriegelungsmechanismus bei in der Schließstellung positionierter Bedienstand-Tür/Fenster-Einheit entriegelt werden kann, so dass die BedienstandTür/Fenster-Einheit in ihre Offenstellung geschwenkt werden kann. Zum Fixieren der Bedienstand-Tür/Fenster-Einheit in der Offenstellung ist eine Fixieranordnung vorgesehen. Um die in der Offenstellung fixierte Bedienstand-Tür/Fenster-Einheit wieder in ihre Schließstellung bewegen zu können, ist in dem Bedienstand ein Freigabehebel angeordnet.

Es ist die Aufgabe der vorliegenden Erfindung, eine Bodenbearbeitungsmaschine vorzusehen, bei welcher in einfacher und zuverlässiger Weise eine Bedienstandtür bzw. ein Bedienstandfenster auch aus dem Bedienstand heraus zwischen einer Schließstellung und einer Offenstellung überführt werden kann.

Erfindungsgemäß wird diese Aufgabe gelöst durch eine Bodenbearbeitungsmaschine, insbesondere Bodenverdichter, umfassend einen Bedienstand mit wenigstens einer an einem Tür/Fenster-Rahmen zwischen einer Schließstellung und einer Offenstellung schwenkbar getragenen BedienstandTür/Fenster-Einheit, wobei an wenigstens einer Bedienstand-Tür/Fenster-Einheit an einer in der Schließstellung einem Bedienstand-Innenraum zugewandten Tür/Fenster-Innenseite eine Handgriffformation zum Verschwenken der BedienstandTür/Fenster-Einheit zwischen der Schließstellung und der Offenstellung vorgesehen ist, ferner umfassend eine Fixieranordnung zum Fixieren der BedienstandTür/Fenster-Einheit in der Offenstellung, wobei die Fixieranordnung vermittels der Handgriffformation zum Freigegeben der in der Offenstellung fixierten BedienstandTür/Fenster-Einheit betätigbar ist.

Bei dem erfindungsgemäßen Aufbau einer Bodenbearbeitungsmaschine kann eine Bedienperson durch Zugriff auf die Handgriffformation eine Bedienstandtür oder ein Bedienstandfenster nicht nur aus dem Bedienstand heraus verschwenken, beispielsweise um diese/s von der Offenstellung in die Schließstellung zu überführen. Durch die Wechselwirkung der Handgriffformation mit der Fixieranordnung kann dann, wenn z.B. die zunächst in der Offenstellung fixierte Bedienstandtür wieder geschlossen oder in Richtung zur Schließstellung bewegt werden soll, bei Einwirkung einer Bedienperson auf die Handgriffformation die Fixierwirkung der Fixieranordnung gelöst werden, so dass für eine Bedienperson keine zusätzlichen Manipulationseingriffe erforderlich sind, um beim Bewegen einer Bedienstandtür aus der Offenstellung in Richtung zur Schließstellung eine in der Offenstellung vorhandene Fixierung zu lösen. Diese Wechselwirkung zwischen der Handgriffformation und der Fixieranordnung ermöglicht es weiter, die Bedienstandtür vermittels der Fixieranordnung in der Offenstellung durch ineinander eingreifende Organe mechanisch zu fixieren und nicht nur in die Offenstellung vorgespannt zu halten. Dies stellt bei einfach zu realisierendem Aufbau sicher, dass auch vergleichsweise starke Bewegungen einer Bodenbearbeitungsmaschine oder starke Luftbewegungen nicht zu einem ungewollten Bewegen der Bedienstandtür aus der Offenstellung heraus führen können.

Zum Erlangen einer stabilen Fixierung kann vorgesehen sein, dass die Fixieranordnung ein bezüglich des Bedienstands feststehendes Fixierorgan und an der Bedienstand-Tür/Fenster-Einheit in Zuordnung zu dem Fixierorgan ein zwischen einer Fixierstellung und einer Freigabestellung verstellbares, mit dem Fixierorgan zum Fixieren der Bedienstand-Tür/Fenster-Einheit in der Offenstellung in Fixiereingriff stehendes oder bringbares Gegen-Fixierorgan umfasst.

Wenn das Gegen-Fixierorgan in seine Freigabestellung vorgespannt ist und durch die Handgriffformation zur Verstellung in seine Freigabestellung freigebbar ist, ist für die Wechselwirkung der Handgriffformationen mit der Fixieranordnung grundsätzlich nur eine Einwirkung auf das Gegen-Fixierorgan in einer Richtung erforderlich. Dies führt zu einem einfach realisierbaren Aufbau.

Beispielsweise kann die Handgriffformation ein zwischen einer Ruhestellung und einer Betätigungsstellung verstellbares und bei Verstellung von der Ruhestellung in die Betätigungsstellung die Fixieranordnung zum Freigegeben der in der Offenstellung fixierten Bedienstand-Tür/Fenster-Einheit beaufschlagendes Handgriffelement umfassen. Das Handgriffelement kann derart ausgelegt sein, dass dessen Verstellung in die Betätigungsstellung dann auftritt, wenn eine Bedienperson auf das Handgriffelement einwirkt, um die zunächst in der Offenstellung fixierte Bedienstand-Tür/Fenster-Einheit aus der Offenstellung in Richtung zur Schließstellung zu verschwenken.

Dabei kann für einen einfach zu realisierenden Aufbau das Handgriffelement zwischen der Ruhestellung und der Betätigungsstellung verschwenkbar sein. Ferner kann für eine definierte Positionierung des Handgriffelements vorgesehen sein, dass das Handgriffelement in seine Ruhestellung vorgespannt ist. Die Wechselwirkung zwischen dem Handgriffelement und der Fixieranordnung kann dadurch erfolgen, dass das Handgriffelement die Fixieranordnung über ein Kopplungselement beaufschlagt. Dies ermöglicht es, die Handgriffformation einerseits und die Fixieranordnung andererseits an verschiedenen Bereichen einer BedienstandTür/Fenster-Einheit vorzusehen.

Dabei kann für eine definiert wirkende Bewegungsumsetzung das Kopplungselement einen Kopplungsschieber umfassen, und an dem Handgriffelement kann ein dem Kopplungsschieber zugeordneter und bei Verstellung des Handgriffelements in Richtung zur Betätigungsstellung den Kopplungsschieber zur Betätigung der Fixieranordnung beaufschlagender Kopplungsschieber-Beaufschlagungsabschnitt vorgesehen sein.

Für eine definierte Wechselwirkung des Kopplungselements mit dem Gegen-Fixierorgan wird vorgeschlagen, dass das Kopplungselement mit dem Gegen-Fixierorgan zur Verstellung desselben zwischen der Fixierstellung und der Freigabestellung vorzugsweise über wenigstens ein Betätigungselement zusammenwirkt, oder/und dass das Kopplungselement in eine Beaufschlagungs-Vorbereitungsstellung vorgespannt ist.

Um im Bereich des Handgriffelements einerseits und des Gegen-Fixierorgans andererseits voneinander unabhängig eine definierte Positionierung erreichen zu können, wird vorgeschlagen, dass dem Handgriffelement eine dieses in seine Ruhestellung vorspannende erste Vorspannanordnung zugeordnet ist, und dass dem Gegen-Fixierorgan eine dieses in seine Freigabestellung vorspannende und von der ersten Vorspannanordnung unabhängig wirksame zweite Vorspannanordnung zugeordnet ist.

Die Bedienstand-Tür/Fenster-Einheit kann an einer Schwenkverbindungsseite an dem Tür/Fenster-Rahmen um eine Schwenkachse schwenkbar getragen sein oder/und kann an einer in Horizontalabstand zur Schwenkverbindungsseite liegenden Verriegelungsseite vermittels einer Verriegelungsformation bezüglich des Tür/Fenster-Rahmens in der Schließstellung verriegelbar sein. Dabei kann der Zugriff auf die Handgriffformation für eine Bedienperson aus dem Bedienstand heraus dadurch erleichtert werden, dass die Handgriffformation bezüglich einer zwischen der Schwenkverbindungsseite und der Verriegelungsseite der Bedienstand-Tür/FensterEinheit liegenden Horizontal-Tür/Fenster-Mitte in Richtung zur Schwenkverbindungsseite versetzt angeordnet ist. Dies hat zur Folge, dass bei in der Offenstellung positionierter Bedienstand-Tür/Fenster-Einheit die Handgriffformation vergleichsweise nahe an der Schwenkverbindungsseite und somit auch nahe am Bedienstand selbst positioniert ist.

Um insbesondere dann, wenn das Fixierorgan an oder nahe am Bedienstand positioniert ist, eine Wechselwirkung desselben mit dem Gegen-Fixierorgan zum Fixieren der Bedienstand-Tür/Fenster-Einheit in der Offenstellung leicht realisieren zu können, wird vorgeschlagen, dass das Gegen-Verriegelungsorgan im Bereich der Horizontal-Tür/Fenster-Mitte oder bezüglich der Horizontal-Tür/Fenster-Mitte in Richtung zur Schwenkverbindungsseite versetzt angeordnet ist.

Die Verriegelungsformation kann einen bezüglich der Horizontal-Tür/Fenster-Mitte in Richtung zur Verriegelungsseite versetzt angeordneten Tür/Fenster-Griff oder/und ein bezüglich der Horizontal-Tür/Fenster-Mitte in Richtung zur Verriegelungsseite versetzt angeordnetes Tür/Fenster-Schloss umfassen. Auf diese Art und Weise kann durch die Verriegelungsformation eine stabil und sicher wirkende Verriegelungswirkung erreicht werden. Unabhängig von der Positionierung und der Ausgestaltung der Verriegelungsformation ist es jedoch ein wesentlicher vorteilhafter Aspekt der vorliegenden Erfindung, dass die Verriegelungsformation von der Handgriffformation bzw. auch der Fixieranordnung unabhängig betätigbar ist bzw. wirkt, und umgekehrt.

Die Bedienstand-Tür/Fenster-Einheit kann ferner eine Tür/Fenster-Oberseite und eine in Vertikalabstand zur Tür/Fenster-Oberseite liegende Tür/Fenster-Unterseite aufweisen. Ein guter Zugriff auf die Handgriffformation kann dabei dadurch erreicht werden, dass die Handgriffformation bezüglich einer zwischen der Tür/Fenster-Oberseite und der Tür/Fenster-Unterseite liegenden Vertikal-Tür/Fenster-Mitte in Richtung zur Tür/Fenster-Oberseite versetzt angeordnet ist. Die Verriegelungsformation kann dann im Bereich der Vertikal-Tür/Fenster-Mitte oder bezüglich der Vertikal-Tür/Fenster-Mitte in Richtung zur Tür/Fenster-Unterseite versetzt angeordnet sein. Somit ist die Verriegelungsformation auch von außen für eine Bedienperson leicht zugänglich, wenn diese eine zunächst in der Schließstellung verriegelte Bedienstand-Tür/Fenster-Einheit öffnen möchte, um Zugang zum Bedienstand zu erhalten.

Bei dem erfindungsgemäßen Aufbau einer Bodenbearbeitungsmaschine ist vorzugsweise vorgesehen, dass in der Offenstellung die Bedienstand-Tür/FensterEinheit in maximalem Ausmaß aus der Schließstellung heraus verschwenkt ist. Hierzu kann beispielsweise die Bedienstand-Tür/Fenster-Einheit zwischen der Schließstellung und der Offenstellung mit einem Schwenkwinkel von mehr als 90°, vorzugsweise mehr als 150°, am meisten bevorzugt etwa 180°, verschwenkbar sein.

Ferner kann bei einer erfindungsgemäß aufgebauten Bodenbearbeitungsmaschine eine Zwischenstellung-Halteformation vorgesehen sein zum Halten der BedienstandTür/Fenster-Einheit in einer Zwischenstellung zwischen der Offenstellung und der Schließstellung. Eine derartige Zwischenstellung kann beispielsweise eine Stellung sein, in welcher die Bedienstand-Tür/Fenster-Einheit mit einem Winkel von etwa 90° aus der Schließstellung heraus in Richtung zur Offenstellung verschwenkt ist. Die Zwischenstellung-Halteformation kann beispielsweise eine die BedienstandTür/Fenster-Einheit in Richtung Offenstellung beaufschlagende Vorspanneinheit und einen lösbaren Bewegungsanschlag umfassen, gegen welchen die BedienstandTür/Fenster-Einheit durch die Vorspanneinheit vorgespannt bzw. gehalten wird, und welcher gelöst werden kann, um die Bedienstand-Tür/Fenster-Einheit zur weitergehenden Verschwenkung in die Offenstellung freizugeben.

Zum Erhöhen der Betriebssicherheit kann weiter vorgesehen sein, dass die Bedienstand-Tür/Fenster-Einheit einen unteren Tür/Fenster-Teil und einen von dem unteren Tür/Fenster-Teil unabhängig zwischen der Schließstellung und der Offenstellung verschwenkbaren oberen Tür/Fenster-Teil umfasst, und dass die Handgriffformation am oberen Tür/Fenster-Teil vorgesehen ist. Somit besteht für eine Bedienperson die Möglichkeit, bei in der Schließstellung gehaltenem unteren Tür/Fenster-Teil den oberen Tür/Fenster-Teil in die Offenstellung zu verschwenken, so dass auch bei in die Offenstellung verschwenktem oberen Tür/Fenster-Teil eine die Bedienperson gegen Herausfallen aus dem Bedienstand sichernde Barriere durch den unteren Tür/Fenster-Teil bereitgestellt werden kann.

Die vorliegende Erfindung wird nachfolgend mit Bezug auf die beiliegenden Figuren detailliert beschrieben. Es zeigt:
- Fig. 1: eine Seitenansicht eines Bodenverdichters mit einem Bedienstand,
- Fig. 2: eine Detailansicht eines bei dem Bodenverdichter der Fig. 1 einsetzbaren Bedienstands mit einer daran schwenkbar getragenen Bedienstandtür mit einer zwischen der Bedienstandtür und dem Bedienstand wirkenden Zwischenstellung-Halteformation;
- Fig. 3: den bei dem Bodenverdichter der Fig. 1 einsetzbaren Bedienstand mit einer durch eine Fixieranordnung in einer Offenstellung fixierbaren Bedienstandtür;
- Fig. 4: eine Draufsicht auf den Bedienstand der Fig. 3 mit in der Offenstellung fixierter Bedienstandtür;
- Fig. 5: eine Seitenansicht des Bedienstands mit in der Offenstellung fixierter Bedienstandtür;
- Fig. 6: eine an der Bedienstandtür vorgesehene Fixieranordnung mit in einer Fixierstellung angeordnetem Gegen-Fixierorgan bei in Richtung zu einer Betätigungsstellung verschwenktem Handgriffelement einer Handgriffformation;
- Fig. 7: den Bedienstand mit in der Offenstellung gehaltener Bedienstandtür und in einer Betätigungsstellung positioniertem Handgriffelement;
- Fig. 8: eine Seitenansicht des Bedienstands mit dem in der Betätigungsstellung positioniertem Handgriffelement;
- Fig. 9: die Fixieranordnung mit in der Betätigungsstellung angeordnetem Handgriffelement und zum Freigeben des Fixierorgans beaufschlagtem Gegen-Fixierungsorgan;
- Fig. 10: die Fixieranordnung mit in einer Freigabestellung angeordnetem Gegen-Fixierorgan;
- Fig. 11: die im Bereich einer Fensterscheibe der Bedienstandtür angeordnete Fixieranordnung mit dem von einem Fixierorgan entkoppelten Gegen-Fixierorgan.

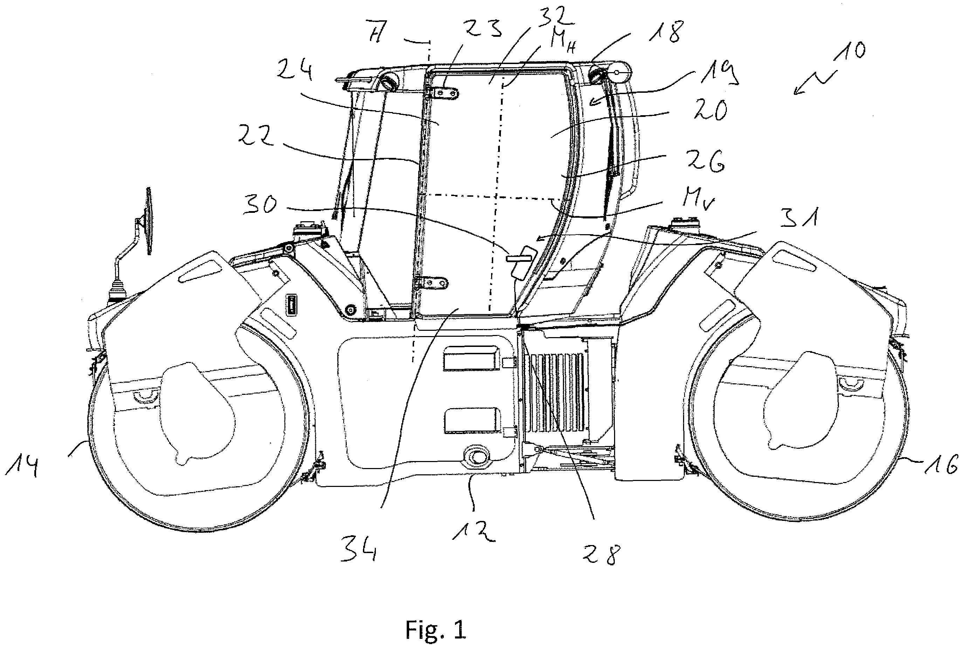

In Fig. 1 ist eine in Form eines Bodenverdichters 10 ausgeführte Bodenbearbeitungsmaschine in Seitenansicht dargestellt. Der Bodenverdichter 10 umfasst einen Maschinenrahmen 12, an welchem zwei Verdichterwalzen 14, 16 um jeweilige Walzendrehachsen drehbar getragen sind. Zumindest eine der Verdichterwalzen 14, 16 ist zum Bewegen des Bodenverdichters 10 zur Drehung antreibbar, und zum Lenken des Bodenverdichters 10 ist zumindest eine der Verdichterwalzen 14, 16 bezüglich des Maschinenrahmens 12 verschwenkbar. Dazu kann ein eine derartige Verdichterwalze tragender Rahmen bezüglich dem einen Bedienstand 18 tragenden Maschinenrahmen 12 verschwenkbar sein. In dem in Fig. 1 dargestellten Beispiel ist dies die rechts erkennbare Verdichterwalze 16. Obgleich selbstverständlich ein derartiger Bodenverdichter 10 zum Verdichten von Untergrund, beispielsweise einem Asphaltuntergrund, eine in beiden Bewegungsrichtungen gleiche Arbeitscharakteristik aufweist, kann bei dem in Fig. 1 dargestellten Bodenverdichter angenommen werden, dass die links erkennbare Verdichterwalze 14 die vordere Verdichterwalze ist, während die rechts erkennbare Verdichterwalze 16 die hintere Verdichterwalze ist. Bewegt sich also der Bodenverdichter 10 in der Darstellung der Fig. 1 nach links, so kann angenommen werden, dass er sich vorwärts bewegt. Bewegt er sich nach rechts, kann angenommen werden, dass er sich rückwärts bewegt.

Am Bedienstand 18 ist an der in Fig. 1 erkennbaren Seite des Bedienstands 18 eine Bedienstand-Tür/Fenster-Einheit 19 in Form einer Bedienstandtür 20 an einem Türrahmen 22 des Bedienstands 18 vermittels mehrerer Scharniere 23 an einer Schwenkverbindungsseite 24 der Bedienstandtür 18 um eine Schwenkachse A schwenkbar getragen. Eine derartige Bedienstandtür kann selbstverständlich auch an der in Figur 1 sind nicht erkennbaren Seite des Bedienstands 18 vorgesehen sein.

Es ist darauf hinzuweisen, dass die nachfolgend mit Bezug auf die Bedienstandtür 20 als Bedienstand-Tür/Fenster-Einheit 19 erläuterten Prinzipien der vorliegenden Erfindung auch Anwendung finden können, wenn die Bedienstand-Tür/FensterEinheit 19 als Fenster, gegebenenfalls auch um eine im Wesentlichen horizontale Achse schwenkbares Fenster, oder als in eine Tür integriertes und bezüglich der Tür beispielsweise um eine näherungsweise vertikale Achse oder um eine näherungsweise horizontale Achse schwenkbares Fenster ausgeführt ist. Im Sinne der vorliegenden Erfindung kann eine Bedienstand-Tür/Fenster-Einheit somit ausgebildet sein als eine beispielsweise um eine näherungsweise vertikale Schwenkachse schwenkbare Tür, welche einteilig oder als in einen oberen Teil und einen unteren Teil geteilte Tür ausgebildet sein kann, sowie als Fenster, welches beispielsweise um eine näherungsweise vertikale oder näherungsweise horizontale Schwenkachse an einem am Bedienstand vorgesehenen Fensterrahmen schwenkbar getragen sein kann, oder als in eine Tür integriertes Fenster, welches an der Tür bzw. an einem an der Tür gebildeten Fensterrahmen um eine zu einer Schwenkachse der Tür beispielsweise im Wesentlichen parallel angeordnete und beispielsweise im wesentlichen vertikal orientierte Schwenkachse schwenkbar getragen sein kann.

Im Bereich einer im Wesentlichen in einer horizontalen Richtung von der Schwenkverbindungsseite 24 entfernten Verriegelungsseite 26 der Bedienstandtür 18 kann diese vermittels eines schematisch angedeuteten Türschlosses 28 bezüglich des Türrahmens 22 verriegelt werden. Im Bereich des Türschlosses 28 kann ein Türgriff 30 vorgesehen sein, über welchen die Bedienstandtür 20 geöffnet und geschlossen werden kann. Das Türschloss 28 und der Türgriff 30 bilden im Wesentlichen eine Verriegelungsformation 31 für die Bedienstandtür 20. Man erkennt, dass bezüglich einer Horizontaltürmitte M_{H} das Türschloss 28 bzw. der Türgriff 30 in Richtung zur Verriegelungsseite 26 versetzt ist. Ferner sind bezüglich einer Vertikal-Türmitte Mv das Türschloss 28 und der Türgriff 30 nach unten, also von einer Türoberseite 32 in Richtung zu einer Türunterseite 34 versetzt.

Es ist darauf hinzuweisen, dass beispielsweise das Türschloss 28 und der Türgriff 30 auch im Bereich der Türunterseite 34 angeordnet sein könnten. Unabhängig von dieser Positionierung ist im Sinne der vorliegenden Erfindung die in Horizontalabstand zur Schwenkverbindungsseite 24 angeordnete Seite der Bedienstandtür 20 als Verriegelungsseite 26 bezeichnet bzw. zu betrachten.

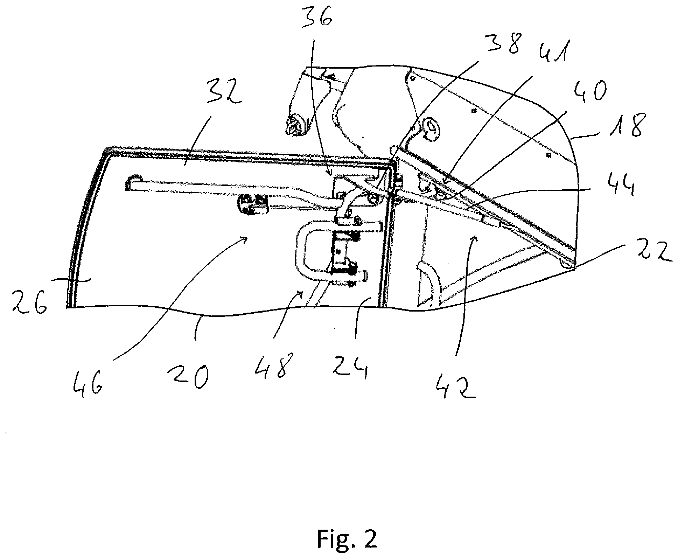

Die Fig. 2 zeigt detaillierter eine zwischen der Bedienstandtür 20 und dem Türrahmen 22 eines bei dem Bodenverdichter 10 der Fig. 1 einsetzbaren Bedienstands 18 wirkende Zwischenstellung-Halteformation 36. Diese umfasst einen im Bereich der Türoberseite 32 nahe an der Schwenkverbindungsseite 24 angebrachten, bogenförmigen Haltebügel 38, welcher mit einem am Türrahmen 22 vorgesehenen Haltebolzen 40 zum Halten der Bedienstandtür 20 in einer Zwischenstellung zusammenwirkt und einen lösbaren Bewegungsanschlag 41 für die Bedienstandtür 20 bildet. In dieser Zwischenstellung kann beispielsweise die Bedienstandtür 20 ausgehend von der in Fig. 1 dargestellten Schließstellung um etwa 90° verschwenkt sein. Eine als Vorspanneinheit 42 wirksame Gasdruckfeder 44 spannt die Bedienstandtür 20 aus der Schließstellung heraus in Richtung zur Zwischenstellung bzw. zu einer Offenstellung vor, so dass bei Erreichen der Zwischenstellung der Haltebügel 38 in Haltewechselwirkung mit dem Haltebolzen 40 tritt und eine weitere Verschwenkung der Bedienstandtür 20 über die Zwischenstellung hinaus in Richtung zur Offenstellung verhindert. Dieser Eingriff zwischen dem Haltebolzen 40 und dem Haltebügel 38 kann beispielsweise durch ziehendes Angreifen am Haltebolzen 40 gelöst werden, so dass auch unter der Vorspannwirkung der Gasdruckfeder 44 die Bedienstandtür 20 zum weitergehenden Verschwenken in Richtung zur Offenstellung freigegeben ist. Eine derartige nachfolgend noch detaillierter erläuterte Offenstellung kann beispielsweise eine Stellung sein, in welcher die Bedienstandtür 20 bezüglich der in Fig. 1 dargestellten Schließstellung um etwa 180° verschwenkt ist, bezogen auf eine Vorwärtsfahrtrichtung des Bodenverdichters 10 also nach vorne verschwenkt ist.

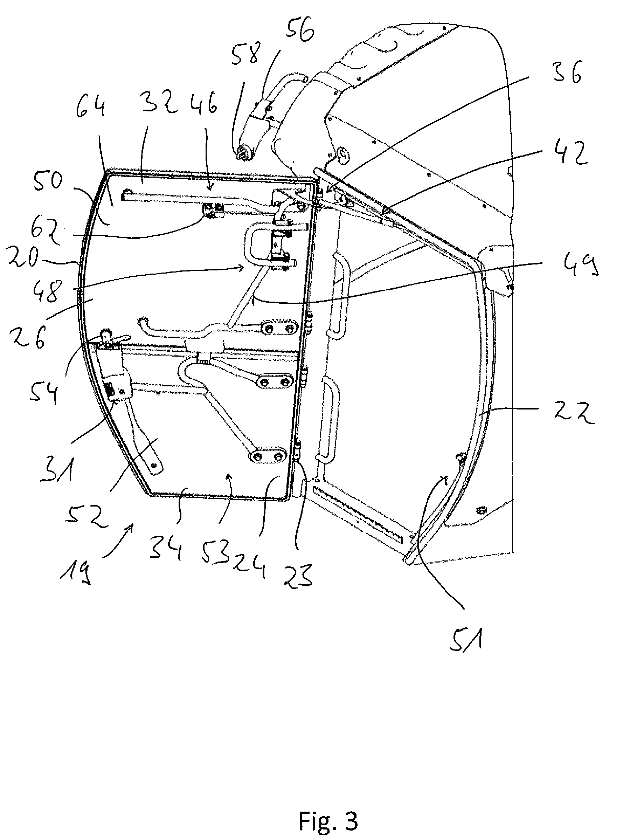

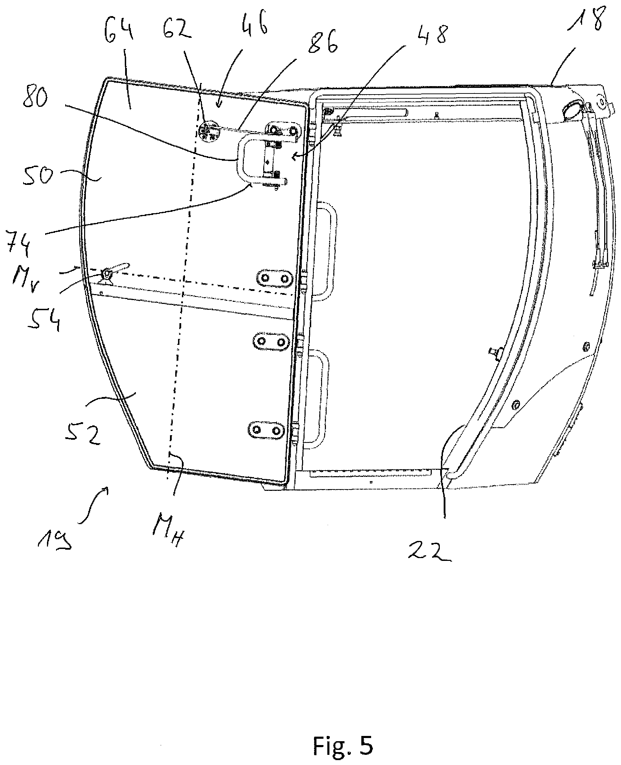

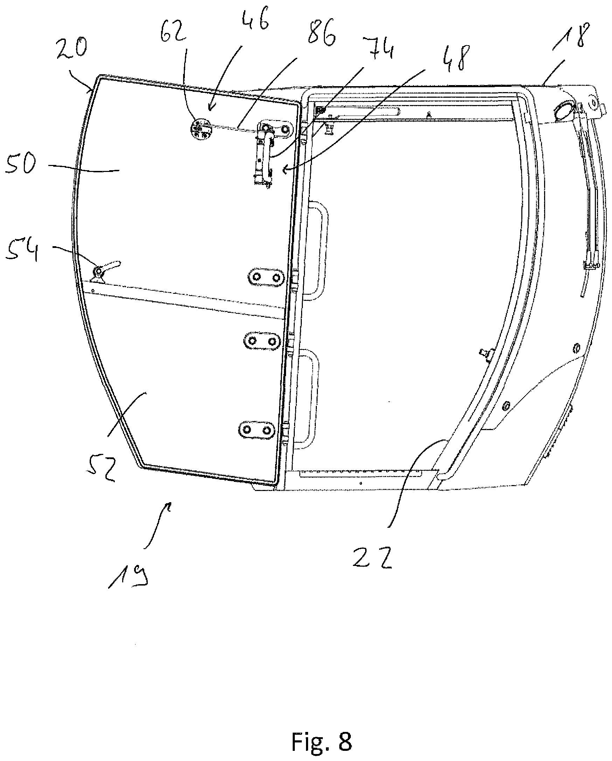

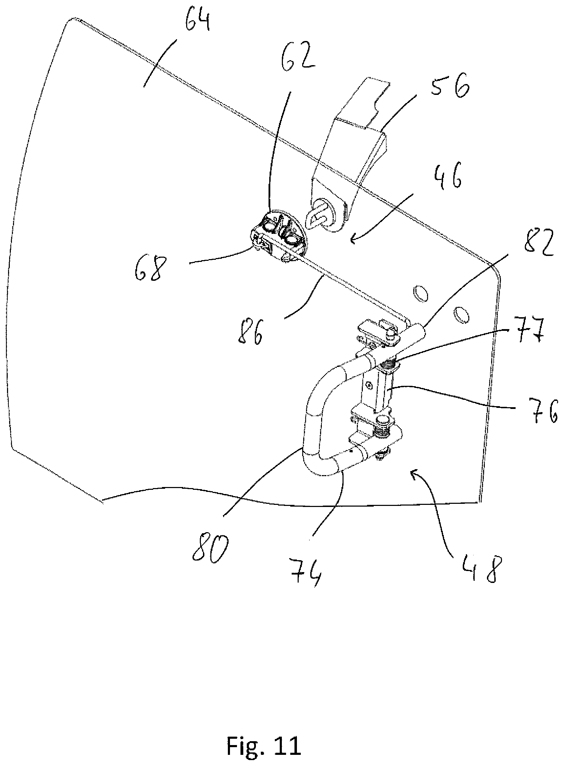

Nachfolgend wird mit Bezug auf die Fig. 3 bis 11 die Wechselwirkung einer zwischen der Bedienstandtür 20 und dem Bedienstand 18 wirkenden Fixieranordnung 46 mit einer an der Bedienstandtür 20 vorgesehenen Handgriffformation 48 beschrieben. Durch die Fixieranordnung 46 kann die Bedienstandtür 20 in der Offenstellung bezüglich des Bedienstands 18 fixiert werden, so dass ein ungewolltes Zurückverschwenken in Richtung zur Schließstellung zuverlässig unterbunden werden kann. Wie bereits voranstehend ausgeführt, kann die Offenstellung der Bedienstandtür 20 eine Stellung sein, in welcher diese um etwa 180° bezüglich des Bedienstands 18 verschwenkt ist, was insbesondere auch bedeutet, dass die Offenstellung diejenige Schwenkstellung der Bedienstandtür ist, in welcher diese ausgehend von der Schließstellung in maximalem Ausmaß um die Schwenkachse A bezüglich des Bedienstands 18 verschwenkt ist.

Die Fig. 3 zeigt die Bedienstandtür 20 in einer Schwenkstellung, in welcher diese sich zwischen der Schließstellung und der Offenstellung, insbesondere auch der vorangehend angesprochenen Zwischenstellung und der Offenstellung befindet. Es ist darauf hinzuweisen, dass, anders als die beispielsweise in Fig. 1 dargestellte Bedienstandtür 20, die in Fig. 3 dargestellte Bedienstandtür 20 geteilt ist und einen oberen Türteil 50 sowie einen unteren Türteil 52 aufweist. Jeder dieser beiden Türteile 50, 52 ist durch mehrere Scharniere 23 am Türrahmen 22 des Bedienstands 18 schwenkbar getragen. Durch einen Kopplungsmechanismus 54 können die beiden Türteile 50, 52 zur gemeinsamen Verschwenkung miteinander verkoppelt werden. Beispielsweise am unteren Türteil 52 kann die Verriegelungsformation 31 vorgesehen sein, so dass bei voneinander entkoppeltem oberem Türteil 50 und unterem Türteil 52 der untere Türteil 52 beispielsweise in der Schließstellung verbleiben kann, während der obere Türteil 50 geöffnet werden kann, beispielsweise bis zur Zwischenstellung oder über die Zwischenstellung hinaus bis zur Offenstellung. Bei miteinander verkoppelten Türteilen 50, 52 verschwenken diese zusammen zwischen der Schließstellung und der Zwischenstellung bzw. der Offenstellung. Es ist darauf hinzuweisen, dass der obere Türteil 50 im Sinne der vorliegenden Erfindung wirken kann wie ein Fenster. D.h., es könnte grundsätzlich auch nur der obere Türteil 50 als Fenster vorgesehen sein, während der untere Türteil 52 am Bedienstand 18 feststehend ausgebildet ist und beispielsweise der Bedienstand 18 über eine an der anderen Seite vorgesehene Tür betreten werden kann.

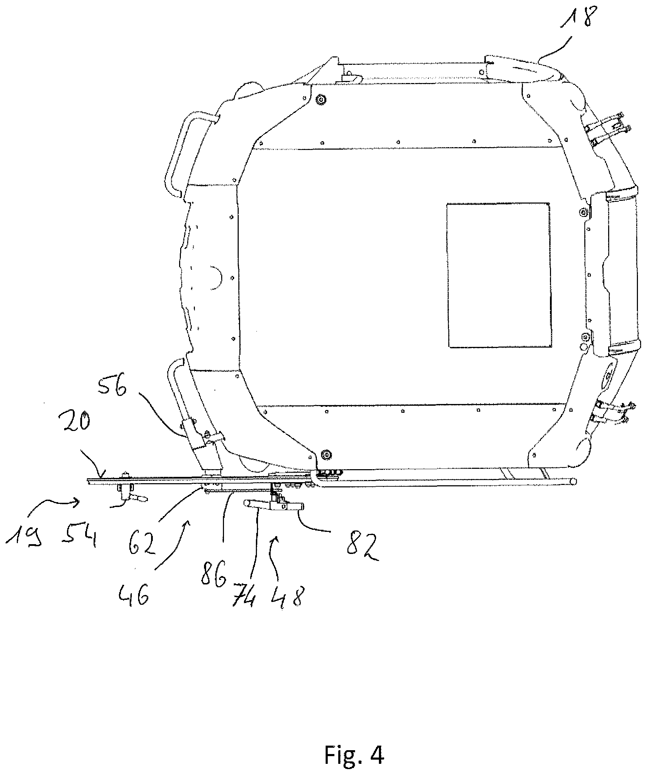

Die Fig. 4 bis 6 zeigen detaillierter die in der Offenstellung fixierte Bedienstandtür 20 sowie auch die Fixieranordnung 46 und die damit zusammenwirkende Handgriffformation 48. Die vorangehend mit Bezug auf die Fig. 2 beschriebene Zwischenstellung-Halteformation 36 ist in Fig. 4 und auch den folgenden Darstellungen aus Gründen der der besseren Erkennbarkeit der nachfolgend detailliert erläuterten Systembereiche nicht gezeigt. Auch die die Bedienstandtür 20 in Richtung zur Offenstellung bzw. zur Zwischenstellung vorspannende Vorspanneinheit 42, also beispielsweise Gasdruckfeder 44, ist in Fig. 4 und den folgenden Darstellungen aus diesem Grund nicht gezeigt. Dies gilt auch für eine allgemein mit 49 bezeichnete Trägerbügelformation, vermittels welcher verschiedene Systembereiche, wie zum Beispiel die Handgriffformation 48 oder die Verriegelungsformation 31, an einer im Schließzustand der Bedienstandtür 20 einem Bedienstand-Innenraum 51 zugewandt liegenden Türinnenseite 53 der Bedienstandtür 20 getragen sind.

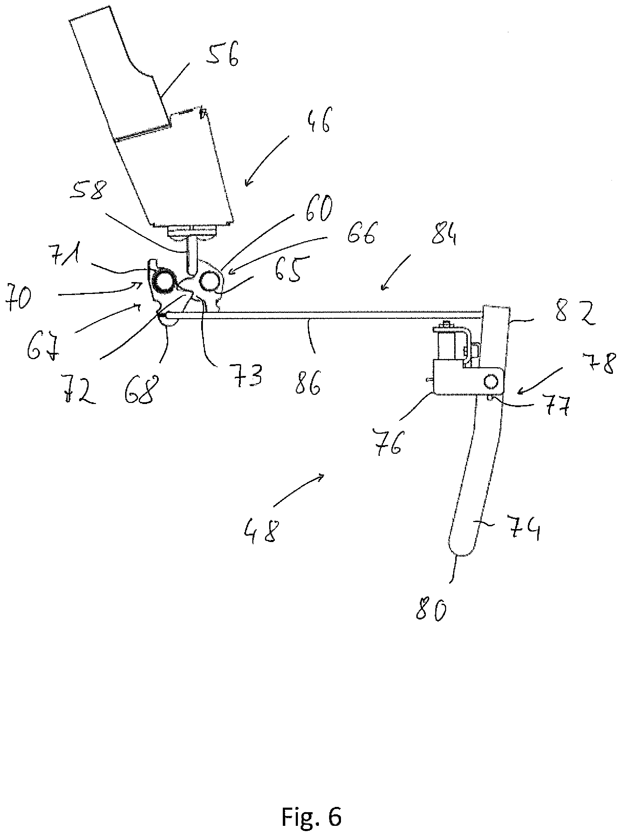

Die Fixieranordnung 46 umfasst ein am Bedienstand 18 vermittels einer Trägeranordnung 56 fest getragenes Fixierorgan 58. In dieses Fixierorgan 58 greift ein hakenartiges Gegen-Fixierorgan 60 ein, das in einer Trägeranordnung 62 an der Bedienstandtür 20, insbesondere einer Fensterscheibe 64 derselben, schwenkbar getragen ist. Das hakenartige Gegen-Fixierorgan 60 ist durch eine beispielsweise eine Schenkelfeder 65 umfassende Vorspannanordnung 66 in der Darstellung der Fig. 6 im Uhrzeigersinn, also in Richtung zu einer Freigabestellung desselben vorgespannt.

Dem Gegen-Fixierorgan 60 ist ein ebenfalls in der Trägeranordnung 62 schwenkbar getragener, ein Betätigungselement 67 für das Gegen-Fixierorgan 60 bereitstellender Betätigungshebel 68 zugeordnet. Dieser ist durch eine diesem zugeordnete Vorspannanordnung 70, beispielsweise wiederum eine Schenkelfeder 71, in einer der Vorspannrichtung des Gegen-Fixierorgans 60 entgegengesetzten Vorspannrichtung zur Schwenkbewegung vorgespannt, also in der Darstellung der Fig. 6 zur Verschwenkung im Gegenuhrzeigersinn. In diesem Zustand greift ein am Betätigungshebel 68 vorgesehener Blockiervorsprung 72 an einem am Gegen-Fixierorgan 60 vorgesehenen Nocken 73 an und blockiert somit das durch die Vorspannanordnung 66 zur Verschwenkung in Richtung zu seiner Freigabestellung vorgespannte Gegen-Fixierorgan 60 gegen eine derartige Verschwenkung und hält dieses in der in Fig. 6 erkennbaren Fixierstellung in Eingriff mit dem Fixierorgan 58.

Soll die in dieser Weise in der Offenstellung fixierte Bedienstandtür 20 freigegeben und in Richtung zur Schließstellung verschwenkt werden, kann eine Bedienperson aus dem Bedienstand 18 heraus an einen Handgriffelement 74 der Handgriffformation 48 ziehend angreifen. Das Handgriffelement 74 ist an einer über die Trägerbügelformation 49 an der Bedienstandtür 20 getragenen Trägeranordnung 76 schwenkbar getragen und in Richtung zu seiner beispielsweise in Fig. 3 dargestellten Ruhestellung, in welcher das Handgriffelement 74 sich im Wesentlichen parallel zur Bedienstandtür 20 erstreckt bzw. an die Bedienstandtür 20 angelegt ist, durch eine beispielsweise eine Schenkelfeder 77 umfassende Vorspannanordnung 78 vorgespannt. Greift eine Bedienperson an einem Handgriffbereich 80 des Handgriffelements 74 an, wenn dieses in seiner in den Fig. 3 bis 5 erkennbaren Ruhestellung ist, so verschwenkt das Handgriffelement 74 aus dieser Ruhestellung heraus derart, dass der Handgriffbereich 80 sich von der Bedienstandtür 20 bzw. der Fensterscheibe 64 derselben entfernt. Dabei nähert ein Kopplungsschieber-Beaufschlagungsabschnitt 82 des Handgriffelements 74 sich einem ein Kopplungselement 84 bereitstellenden, beispielsweise als Stange ausgebildeten Kopplungsschieber 86 an. Der Kopplungsschieber 86 ist mit dem Betätigungshebel 68 bewegungsverkoppelt und durch dessen Vorspannanordnung 70 in eine Beaufschlagungs-Vorbereitungsstellung vorgespannt, in welche dieser in der Darstellung der Fig. 6 in maximalem Ausmaß nach rechts, also grundsätzlich in maximalem Ausmaß in Richtung zur Schwenkverbindungsseite 24 der Bedienstandtür 20 verschoben ist.

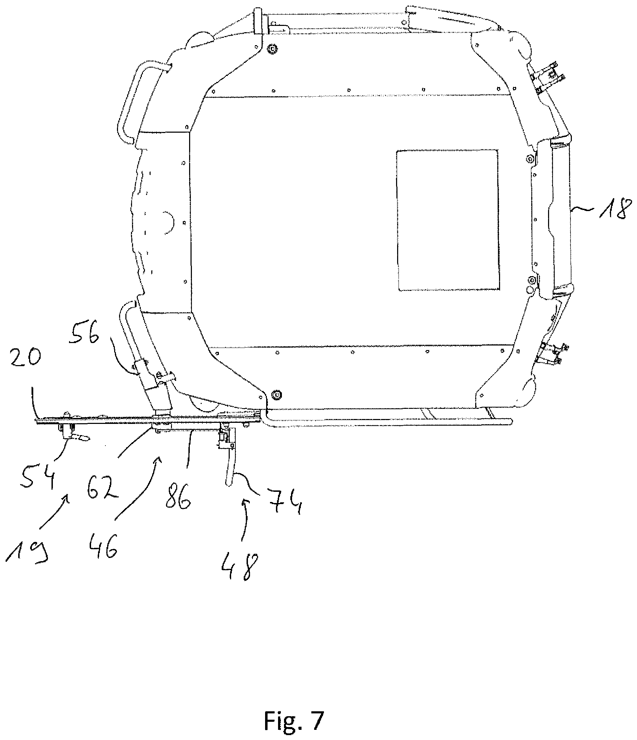

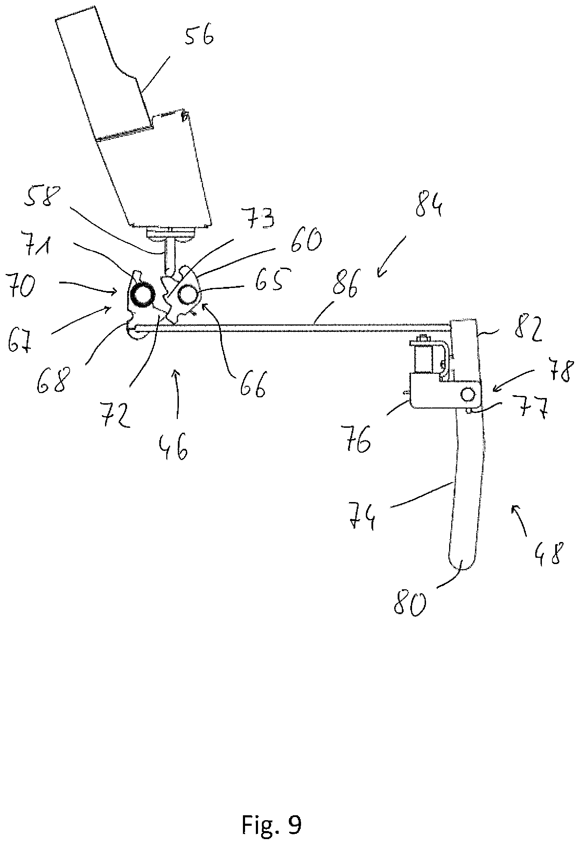

Im Laufe der Verschwenkbewegung des Handgriffelements 74 kommt dieses mit seinem Kopplungsschieber-Beaufschlagungsabschnitt 82 in Anlage an dem in der Beaufschlagungs-Vorbereitungsstellung gehaltenen Kopplungsschieber 86. Bei weiterer Verschwenkung des Handgriffelements 74 in Richtung zu seiner beispielsweise auch in den Fig. 7-9 erkennbaren Betätigungsstellung verschiebt dieses den Kopplungsschieber 86 aus seiner Beaufschlagungs-Vorbereitungsstellung heraus in der Darstellung der Fig. 6 nach links, was zu einer entsprechenden Verschwenkung des Betätigungshebels 68 gegen die Vorspannwirkung der diesem zugeordneten Vorspannanordnung 70 führt. Im Zuge dieser Schwenkbewegung beaufschlagt der Blockiervorsprung 72 den Nocken 73 und verschwenkt somit das Gegen-Fixierorgan 60 zunächst geringfügig entgegen der Vorspannwirkung der diesem zugeordneten Vorspannanordnung 66 weiter in Richtung Fixierstellung bzw. über die Fixierstellung hinaus. Wenn der Blockiervorsprung 72 sich über den Nocken 73 hinweg bewegt, gibt der Betätigungshebel 68 das Gegen-Fixierorgan 60 zur Verschwenkung frei, so dass dieses unter der Vorspannwirkung der diesem zugeordneten Vorspannanordnung 66 in seine in Fig. 9 erkennbare Freigabestellung verschwenken kann. In dieser Freigabestellung blockiert zunächst der Blockiervorsprung 72 des Betätigungshebels 68 das Gegen-Fixierorgan 60 gegen weitergehende Verschwenkung.

Durch das Verschwenken des Handgriffelements 74 von der in den Fig. 3 bis 5 dargestellten Ruhestellung zu der in Fig. 7-9 dargestellten Betätigungsstellung wird also einerseits die Fixierwirkung der Fixieranordnung 46 gelöst. Andererseits wird durch die dabei auf die Bedienstandtür 20 ausgeübte Kraft diese aus der Offenstellung heraus verschwenkt und beispielsweise in die Schließstellung gebracht.

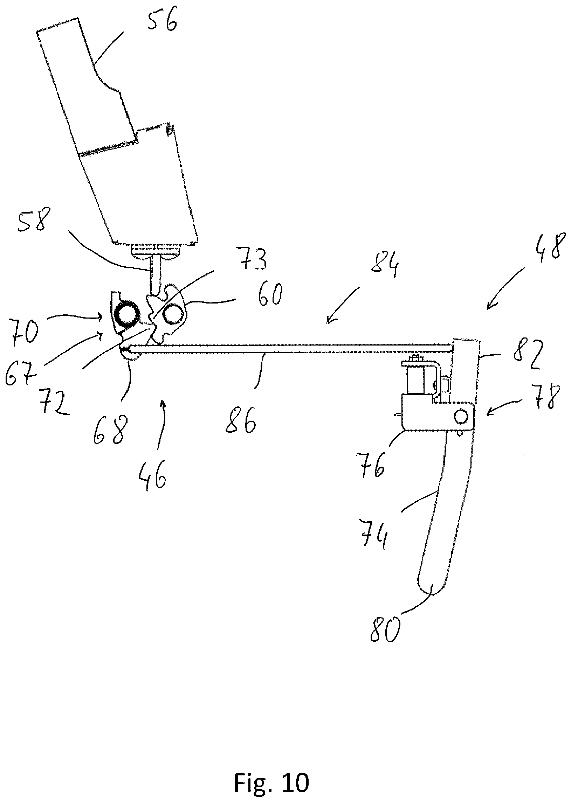

Wird bei aus der Offenstellung heraus verschwenkter Bedienstandtür 20 die Beaufschlagung des Handgriffelements 74 aufgegeben, so verschwenkt dieses wieder in seine Ruhestellung. Dabei gibt der Kopplungsschieber-Beaufschlagungsabschnitt 82 den Kopplungsschieber 86 frei. Dies führt dazu, dass unter der Vorspannwirkung der Vorspannanordnung 70 der Betätigungshebel 68 verschwenken kann und dabei den Kopplungsschieber 86 in seine Beaufschlagungs-Vorbereitungsstellung verschiebt. Diese Verschwenkung dauert so lange an, bis, wie in Fig. 10 dargestellt, der Blockiervorsprung 72 in Anlage am Nocken 73 kommt. Eine weitere Verschwenkung des Betätigungshebels 68 ist dann aufgrund des in seine Freigabestellung vorgespannten und in dieser gehaltenen Gegen-Fixierorgans 60 nicht möglich. Das Gegen-Fixierorgan 60 und der Betätigungshebel 68 blockieren sich in diesem Zustand gegenseitig gegen weitere Verschwenkung.

Wird, ausgehend von dem in Fig. 10 dargestellten Zustand, die Bedienstandtür 20 bei in seine Ruhestellung beispielsweise gemäß Fig. 4 zurück verschwenktem Handgriffelement 74 wieder in Richtung Offenstellung verschwenkt, kommt das Gegen-Fixierorgan 60 in Anlage am Fixierorgan 58. Dieses beaufschlagt nunmehr das Gegen-Fixierorgan 60 zur Verschwenkung entgegen der Vorspannwirkung der diesem zugeordneten Vorspannanordnung 66, also in der Darstellung der Fig. 10 zur Verschwenkung im Gegenuhrzeigersinn. Dabei kommt das Gegen-Fixierorgan 60 in Eingriff mit dem Fixierorgan 58 und verschwenkt vermittels der Wechselwirkung des Nockens 73 mit dem Blockiervorsprung 72 den Betätigungshebel 68 entgegen der Vorspannwirkung der diesem zugeordneten Vorspannanordnung 70, bis der Nocken 73 sich über den Blockierabschnitt 72 hinweg bewegt hat und der Betätigungshebel 68 wieder in die in Fig. 6 erkennbare und das Gegen-Fixierorgan 60 in seiner Fixierstellung blockierende, den Kopplungsschieber 86 in seiner Beaufschlagungs-Vorbereitungsstellung haltende Positionierung gelangt. In diesem Zustand blockieren der Betätigungshebel 68 und das Gegen-Fixierorgan 60 sich gegenseitig gegen Verschwenkung, so dass das Gegen-Fixierorgan 60 zuverlässig in Eingriff mit dem Fixierorgan 58 gehalten ist. Zum erneuten Lösen dieser Fixierwirkung kann in der vorangehend beschriebenen Art und Weise dann wieder das Handgriffelement 74 aus der Ruhestellung heraus in Richtung zu seiner Betätigungsstellung verschwenkt werden.

Durch den vorangehen beschriebenen Aufbau wird in einfacher Art und Weise die Möglichkeit geschaffen, einerseits eine Bedienstandtür zuverlässig in der Offenstellung, also einer maximal aus der Schließstellung heraus verschwenkten Stellung zu halten. Andererseits besteht durch die Wechselwirkung des Handgriffelements mit der Fixieranordnung für eine im Bedienstand positionierte Bedienperson einfach die Möglichkeit, durch Einwirken auf das Handgriffelement sowohl die Fixierwirkung aufzuheben, als auch die Bedienstandtür in Richtung zur Schließstellung zu verschwenken. Hierzu ist es besonders vorteilhaft, dass die Handgriffformation mit ihrem Handgriffelement nahe an der Schwenkverbindungsseite der Bedienstandtür positioniert ist, also derjenigen Seite, welche einer im Bedienstand positionierten Bedienperson näher ist. Von Vorteil ist dabei auch, dass die Handgriffformation und mit dieser auch die Fixieranordnung nahe der Türoberseite angeordnet ist, was einerseits den Zugriff auf das Handgriffelement erleichtert, andererseits insbesondere auch den unteren und mittleren Bereich der Bedienstandtür zur Durchsicht freigibt.

Es ist darauf hinzuweisen, dass selbstverständlich eine derartige Ausgestaltung einer Bedienstandtür an beiden Seiten eines Bedienstands realisiert sein kann, so dass die an beiden Seiten eines derartigen Bedienstands vorgesehenen Bedienstandtüren in gleicher Art und Weise betätigt bzw. in der Offenstellung fixiert werden können. Auch kann der vorangehend beschriebene Mechanismus zum Fixieren einer Bedienstandtür bei einer geteilten Bedienstandtür eingesetzt werden, wie sie beispielsweise in Fig. 1 dargestellt ist.

Wie bereits ausgeführt, können die Prinzipien der vorliegenden Erfindung auch Anwendung finden bei einem als Bedienstand-Tür/Fenster-Einheit wirksamen Fenster, das beispielsweise an einem Rahmen des Bedienstands um eine näherungsweise horizontale Achse oder eine näherungsweise vertikale Achse schwenkbar sein kann und in einer Offenstellung fixiert werden kann, die insbesondere dann, wenn ein derartiges Fenster um eine näherungsweise horizontale Achse schwenkbar ist, bezüglich einer Schließstellung eines derartigen Fensters um etwa 90° verschwenkt sein kann, so dass in der Offenstellung, in welcher das Fenster mit dem vorangehend beschriebenen Mechanismus zu fixieren ist, das Fenster beispielsweise näherungsweise horizontal orientiert ist und somit aus dem Sichtfeld einer Bedienperson heraus verschwenkt ist. In Zuordnung zu einem derartigen Fenster bzw. dem am Fenster vorgesehenen und durch die gleichermaßen am Fenster vorgesehene Handgriffformation zu betätigenden Gegen-Fixierorgan ist an geeigneter Position am Bedienstand das Fixierorgan vorzusehen. Auch kann ein derartiges Fenster in eine Bedienstandtür integriert sein. Die Handgriffformation und das Fixierorgan der Fixieranordnung können an dem an der Tür beispielsweise um eine näherungsweise vertikale Schwenkachse bzw. eine zu einer Schwenkachse der Tür im Wesentlichen parallele Schwenkachse schwenkbar getragenen Fenster vorgesehen sein. Da abhängig davon, ob das Fenster alleine oder zusammen mit der Tür verschwenkt wird, das Fixierorgan im Verlaufe der Schwenkbewegung unterschiedliche Bewegungsbahnen durchlaufen wird und in der Offenstellung des Fensters alleine bzw. der Offenstellung der Tür mit dem Fenster unterschiedliche Raumlagen einnehmen wird, sind bei derartiger Ausgestaltung am Bedienstand beispielsweise zwei Fixierorgane an unterschiedlichen Positionen vorzusehen. Eines der Fixierorgane kann dann mit dem Gegen-Fixierorgan zusammenwirken, wenn bei grundsätzlich geschlossener Tür das Fenster alleine in eine Offenstellung verschwenkt wird. Das andere Fixierorgan kann mit dem Gegen-Fixierorgan zusammenwirken, wenn das Fenster zusammen mit der Tür verschwenkt und in eine Offenstellung gebracht wird.

## Patentansprüche

1. Bodenbearbeitungsmaschine, insbesondere Bodenverdichter, umfassend einen Bedienstand (18) mit wenigstens einer an einem Tür/Fenster-Rahmen (22) zwischen einer Schließstellung und einer Offenstellung schwenkbar getragenen Bedienstand-Tür/Fenster-Einheit (19), wobei an wenigstens einer Bedienstand-Tür/Fenster-Einheit (19) an einer in der Schließstellung einem Bedienstand-Innenraum (51) zugewandten Tür/Fenster-Innenseite (53) eine Handgriffformation (48) zum Verschwenken der Bedienstand-Tür/FensterEinheit (19) zwischen der Schließstellung und der Offenstellung vorgesehen ist, ferner umfassend eine Fixieranordnung (46) zum Fixieren der Bedienstand-Tür/Fenster-Einheit (19) in der Offenstellung, **dadurch gekennzeichnet, dass** die Fixieranordnung (46) vermittels der Handgriffformation (48) zum Freigegeben der in der Offenstellung fixierten Bedienstand-Tür/Fenster-Einheit (19) betätigbar ist.

2. Bodenbearbeitungsmaschine nach Anspruch 1,
**dadurch gekennzeichnet, dass** die Fixieranordnung (46) ein bezüglich des Bedienstands (18) feststehendes Fixierorgan (58) und an der BedienstandTür/Fenster-Einheit (19) in Zuordnung zu dem Fixierorgan (58) ein zwischen einer Fixierstellung und einer Freigabestellung verstellbares, mit dem Fixierorgan (58) zum Fixieren der Bedienstand-Tür/Fenster-Einheit (19) in der Offenstellung in Fixiereingriff stehendes oder bringbares Gegen-Fixierorgan (60) umfasst.

3. Bodenbearbeitungsmaschine nach Anspruch 2,
**dadurch gekennzeichnet, dass** das Gegen-Fixierorgan (60) in seine Freigabestellung vorgespannt ist und vermittels der Handgriffformation (48) zur Verstellung in seine Freigabestellung freigebbar ist.

4. Bodenbearbeitungsmaschine nach einem der vorangehenden Ansprüche,
**dadurch gekennzeichnet, dass** die Handgriffformation (48) ein zwischen einer Ruhestellung und einer Betätigungsstellung verstellbares und bei Verstellung von der Ruhestellung in die Betätigungsstellung die Fixieranordnung (46) zum Freigegeben der in der Offenstellung fixierten Bedienstand-Tür/Fenster-Einheit (19) beaufschlagendes Handgriffelement (74) umfasst.

5. Bodenbearbeitungsmaschine nach Anspruch 4,
**dadurch gekennzeichnet, dass** Handgriffelement (74) zwischen der Ruhestellung und der Betätigungsstellung verschwenkbar ist, oder/und dass das Handgriffelement (74) in seine Ruhestellung vorgespannt ist, oder/und dass das Handgriffelement (74) die Fixieranordnung (46) über ein Kopplungselement (84) beaufschlagt.

6. Bodenbearbeitungsmaschine nach Anspruch 5,
**dadurch gekennzeichnet, dass** das Kopplungselement (84) einen Kopplungsschieber (86) umfasst, und dass an dem Handgriffelement (74) ein dem Kopplungsschieber (86) zugeordneter und bei Verstellung des Handgriffelements (74) in Richtung zur Betätigungsstellung den Kopplungsschieber (86) zur Betätigung der Fixieranordnung (46) beaufschlagender Kopplungsschieber-Beaufschlagungsabschnitt (82) vorgesehen ist.

7. Bodenbearbeitungsmaschine nach Anspruch 2 und Anspruch 5 oder 6,
**dadurch gekennzeichnet, dass** das Kopplungselement (84) mit dem Gegen-Fixierorgan (60) zur Verstellung desselben zwischen der Fixierstellung und der Freigabestellung vorzugsweise über wenigstens ein Betätigungselement (67) zusammenwirkt, oder/und dass das Kopplungselement (84) in eine Beaufschlagungs-Vorbereitungsstellung vorgespannt ist.

8. Bodenbearbeitungsmaschine nach Anspruch 2 und einem der Ansprüche 4-7,
**dadurch gekennzeichnet, dass** dem Handgriffelement (74) eine dieses in seine Ruhestellung vorspannende erste Vorspannanordnung (78) zugeordnet ist, und dass dem Gegen-Fixierorgan (60) eine dieses in seine Freigabestellung vorspannende und von der ersten Vorspannanordnung (78) unabhängig wirksame zweite Vorspannanordnung (66) zugeordnet ist.

9. Bodenbearbeitungsmaschine nach einem der vorangehenden Ansprüche,
**dadurch gekennzeichnet, dass** die Bedienstand-Tür/Fenster-Einheit (19) an einer Schwenkverbindungsseite (24) an dem Tür/Fenster-Rahmen (22) um eine Schwenkachse (A) schwenkbar getragen ist oder/und an einer in Horizontalabstand zur Schwenkverbindungsseite (24) liegenden Verriegelungsseite (26) vermittels einer Verriegelungsformation (31) bezüglich des Tür/Fenster-Rahmens (22) in der Schließstellung verriegelbar ist, und dass die Handgriffformation (48) bezüglich einer zwischen der Schwenkverbindungsseite (24) und der Verriegelungsseite (26) der Bedienstand-Tür/Fenster-Einheit (19) liegenden Horizontal-Tür/Fenster-Mitte (M_{H}) in Richtung zur Schwenkverbindungsseite (24) versetzt angeordnet ist.

10. Bodenbearbeitungsmaschine nach Anspruch 2 und Anspruch 9,
**dadurch gekennzeichnet, dass** das Gegen-Verriegelungsorgan (60) im Bereich der Horizontal-Tür/Fenster-Mitte (M_{H}) oder bezüglich der Horizontal-Tür/Fenster-Mitte (M_{H}) in Richtung zur Schwenkverbindungsseite (24) versetzt angeordnet ist.

11. Bodenbearbeitungsmaschine nach Anspruch 9 oder 10,
**dadurch gekennzeichnet, dass** die Verriegelungsformation (31) einen bezüglich der Horizontal-Tür/Fenster-Mitte (M_{H}) in Richtung zur Verriegelungsseite (26) versetzt angeordneten Tür/Fenster-Griff (30) oder/und ein bezüglich der Horizontal-Tür/Fenster-Mitte (M_{H}) in Richtung zur Verriegelungsseite (26) versetzt angeordnetes Tür/Fenster-Schloss (28) umfasst.

12. Bodenbearbeitungsmaschine nach einem der vorangehenden Ansprüche,
**dadurch gekennzeichnet, dass** die Bedienstand-Tür/Fenster-Einheit (19) eine Tür/Fenster-Oberseite (32) und eine in Vertikalabstand zur Tür/Fenster-Oberseite (32) liegende Tür/Fenster-Unterseite (34) aufweist, und dass die Handgriffformation (48) bezüglich einer zwischen der Tür/Fenster-Oberseite (32) und der Tür/Fenster-Unterseite (34) liegenden Vertikal-Tür/Fenster-Mitte (Mv) in Richtung zur Tür/Fenster-Oberseite (32) versetzt angeordnet ist.

13. Bodenbearbeitungsmaschine nach Anspruch 9 und Anspruch 12,
**dadurch gekennzeichnet, dass** die Verriegelungsformation im Bereich der Vertikal-Tür/Fenster-Mitte (Mv) oder bezüglich der Vertikal-Tür/Fenster-Mitte (Mv) in Richtung zur Tür/Fenster-Unterseite (34) versetzt angeordnet ist.

14. Bodenbearbeitungsmaschine nach einem der vorangehenden Ansprüche,
**dadurch gekennzeichnet, dass** in der Offenstellung die BedienstandTür/Fenster-Einheit (19) in maximalem Ausmaß aus der Schließstellung heraus verschwenkt ist, oder/und dass die Bedienstand-Tür/Fenster-Einheit (19) zwischen der Schließstellung und der Offenstellung mit einem Schwenkwinkel von mehr als 90°, vorzugsweise mehr als 150°, am meisten bevorzugt etwa 180°, verschwenkbar ist.

15. Bodenbearbeitungsmaschine nach einem der vorangehenden Ansprüche,
**dadurch gekennzeichnet, dass** eine Zwischenstellung-Halteformation (36) vorgesehen ist zum Halten der Bedienstand-Tür/Fenster-Einheit (19) in einer Zwischenstellung zwischen der Offenstellung und der Schließstellung.

16. Bodenbearbeitungsmaschine nach Anspruch 15,
**dadurch gekennzeichnet, dass** die Zwischenstellung-Halteformation (36) eine die Bedienstand-Tür/Fenster-Einheit (19) in Richtung Offenstellung beaufschlagende Vorspanneinheit (42) und einen lösbaren Bewegungsanschlag (41) umfasst.

17. Bodenbearbeitungsmaschine nach einem der vorangehenden Ansprüche,
**dadurch gekennzeichnet, dass** die Bedienstand-Tür/Fenster-Einheit (19) einen unteren Tür/Fenster-Teil (52) und einen von dem unteren Tür/Fensterteil (52) unabhängig zwischen der Schließstellung und der Offenstellung verschwenkbaren oberen Tür/Fenster-Teil (50) umfasst, und dass die Handgriffformation (48) am oberen Tür/Fenster-Teil (50) vorgesehen ist.

## Claims

1. Soil processing machine, in particular a soil compactor, comprising a control cabin (18) having at least one control cabin door/window unit (19) pivotably supported on a door/window frame (22) between a closed position and an open position, wherein a handle formation (48) for pivoting the control cabin door/window unit (19) between the closed position and the open position is provided on at least one control cabin door/window unit (19) on a door/window inside (53) facing a control cabin interior (51) in the closed position, further comprising a fixing arrangement (46) for fixing the control cabin door/window unit (19) in the open position,
**characterized in that** the fixing arrangement (46) is operable by means of the handle formation (48) for releasing the control cabin door/window unit (19) fixed in the open position.

2. Soil processing machine according to claim 1,
**characterized in that** the fixing arrangement (46) comprises a fixing member (58) which is fixed with respect to the control cabin (18) and, on the control cabin door/window unit (19) in association with the fixing member (58), a counter-fixing member (60) which is adjustable between a fixing position and a release position and which can be in or brought into fixing engagement with the fixing member (58) for fixing the control cabin door/window unit (19) in the open position.

3. Soil processing machine according to claim 2,
**characterized in that** the counter-fixing member (60) is pretensioned into its release position and can be released for adjustment into its release position by means of the handle formation (48).

4. Soil processing machine according to one of the preceding claims,
**characterized in that** the handle formation (48) comprises a handle element (74) which can be adjusted between a rest position and an actuation position and, upon adjustment from the rest position to the actuation position, acts on the fixing arrangement (46) for releasing the control cabin door/window unit (19) fixed in the open position.

5. Soil processing machine according to claim 4,
**characterized in that** the handle element (74) is pivotable between the rest position and the actuation position, and/or that the handle element (74) is pretensioned in its rest position, and/or that the handle element (74) acts on the fixing arrangement (46) via a coupling element (84).

6. Soil processing machine according to claim 5,
**characterized in that** the coupling element (84) comprises a coupling slide (86), and **in that** a coupling slide actuating section (82) assigned to the coupling slide (86) and acting on the coupling slide (86) for actuating the fixing arrangement (46) when adjusting the handle element (74) in the direction of the actuating position is provided on the handle element (74).

7. Soil processing machine according to claim 2 and claim 5 or 6,
**characterized in that** the coupling element (84) interacts with the counter-fixing member (60) to adjust the latter between the fixing position and the release position, preferably via at least one actuating element (67), and/or **in that** the coupling element (84) is pretensioned to an acting preparation position.

8. Soil processing machine according to claim 2 and one of claims 4 to 7,
**characterized in that** the handle element (74) is assigned a first pretensioning arrangement (78) which pretensions it into its rest position, and **in that** the counter-fixing member (60) is assigned a second pretensioning arrangement (66) which pretensions it into its release position and is effective independently of the first pretensioning arrangement (78).

9. Soil processing machine according to one of the preceding claims,
**characterized in that** the control cabin door/window unit (19) is pivotally supported on a pivot connection side (24) on the door/window frame (22) about a pivot axis (A) and/or can be locked in the closed position by means of a locking formation (31) with respect to the door / window frame (22) on a locking side (26) lying at a horizontal distance to the pivot connection side (24), and **in that** the handle formation (48) is arranged offset with respect to a horizontal door/window centre (M_{H}) lying between the pivot connection side (24) and the locking side (26) of the control cabin door/window unit (19) in the direction of the pivot connection side (24).

10. Soil processing machine according to claim 2 and claim 9,
**characterized in that** the counter-locking member (60) is arranged offset in the region of the horizontal door/window centre (M_{H}) or with respect to the horizontal door/window centre (M_{H}) in the direction of the pivot connection side (24).

11. Soil processing machine according to claim 9 or 10,
**characterized in that** the locking formation (31) comprises a door/window handle (30) arranged offset with respect to the horizontal door/window centre (M_{H}) in the direction of the locking side (26) and/or a door/window lock (28) arranged offset with respect to the horizontal door/window centre (M_{H}) in the direction of the locking side (26).

12. Soil processing machine according to one of the preceding claims,
**characterized in that** the control cabin door/window unit (19) has a door/window top (32) and a door/window bottom (34) lying at a vertical distance from the door/window top (32), and **in that** the handle formation (48) is arranged offset with respect to a vertical door/window centre (Mv) lying between the door/window top (32) and the door/window bottom (34) in the direction of the door/window top (32).

13. Soil processing machine according to claim 9 and claim 12,
**characterized in that** the locking formation is arranged offset in the region of the vertical door/window centre (Mv) or with respect to the vertical door/window centre (M_{V}) in the direction of the door/window bottom (34).

14. Soil processing machine according to one of the preceding claims,
**characterized in that** in the open position, the control cabin door/window unit (19) is pivoted to the maximum extent out of the closed position, and/or **in that** the control cabin door/window unit (19) is pivotable between the closed position and the open position with a pivot angle of more than 90°, preferably more than 150°, most preferably about 180°.

15. Soil processing machine according to one of the preceding claims,
**characterized in that** an intermediate position holding formation (36) is provided for holding the control cabin door/window unit (19) in an intermediate position between the open position and the closed position.

16. Soil processing machine according to claim 15,
**characterized in that** the intermediate position holding formation (36) comprises a pretensioning unit (42) acting on the control cabin door/window unit (19) in the direction of the open position and a releasable movement stop (41).

17. Soil processing machine according to one of the preceding claims,
**characterized in that** the control cabin door/window unit (19) comprises a lower door/window part (52) and an upper door/window part (50) which can be pivoted independently of the lower window/door part (52) between the closed position and the open position and **in that** the handle formation (48) is provided on the upper door/window part (50).

## Revendications

1. Machine de travail du sol, en particulier un compacteur de sol, comprenant une cabine de commande (18) ayant au moins une unité porte/fenêtre de cabine de commande (19) supportée de manière pivotante sur un cadre de la porte/fenêtre (22) entre une position fermée et une position ouverte, dans lequel une formation de poignée (48) pour faire pivoter l'unité porte/fenêtre de cabine de commande (19) entre la position fermée et la position ouverte est prévue sur au moins une unité porte/fenêtre de cabine de commande (19) sur une face intérieure de porte/fenêtre (53) faisant face à un intérieur de cabine de commande (51) dans la position fermée, comprenant en outre un dispositif de fixation (46) pour fixer l'unité porte/fenêtre de cabine de commande (19) dans la position ouverte,
**caractérisé en ce que** le dispositif de fixation (46) peut être actionné au moyen de la formation de poignée (48) pour libérer l'unité porte/fenêtre de cabine de commande (19) fixée en position ouverte.

2. Machine de travail du sol selon la revendication 1,
**caractérisé en ce que** le dispositif de fixation (46) comprend un élément de fixation (58) fixé par rapport à la cabine de commande (18) et, sur l'unité porte/fenêtre de cabine de commande (19) en association avec l'élément de fixation (58), un élément de contre-fixation (60) réglable entre une position de fixation et une position de relâchement et qui peut être en prise ou amené en prise avec l'élément de fixation (58) pour fixer la porte/fenêtre de cabine de commande (19) dans la position ouverte.

3. Machine de travail du sol selon la revendication 2,
**caractérisé en ce que** l'élément de contre-fixation (60) est précontraint dans sa position de relâchement et peut être libéré pour être ajusté dans sa position de relâchement au moyen de la formation de poignée (48).

4. Machine de travail du sol selon l'une des revendications précédentes,
**caractérisé en ce que** la formation de poignée (48) comprend un élément de poignée (74) qui peut être ajusté entre une position de repos et une position d'actionnement et qui, lors de l'ajustement de la position de repos à la position d'actionnement, agit sur le dispositif de fixation (46) pour libérer l'unité porte/fenêtre de cabine de commande (19) fixée en position ouverte.

5. Machine de travail du sol selon la revendication 4,
**caractérisé en ce que** l'élément de poignée (74) peut pivoter entre la position de repos et la position d'actionnement, et/ou que l'élément de poignée (74) est précontraint dans sa position de repos, et/ou que l'élément de poignée (74) agit sur le dispositif de fixation (46) par l'intermédiaire d'un élément d'accouplement (84).

6. Machine de travail du sol selon la revendication 5,
**caractérisé en ce que** l'élément d'accouplement (84) comprend une glissière d'accouplement (86), et **en ce qu'**une section d'actionnement de la glissière d'accouplement (82) affectée à la glissière d'accouplement (86) et agissant sur la glissière d'accouplement (86) pour actionner le dispositif de fixation (46) lors du réglage de l'élément de poignée (74) dans la direction de la position d'actionnement est prévue sur l'élément de poignée (74).

7. Machine de travail du sol selon la revendication 2 et la revendication 5 ou 6,
**caractérisé en ce que** l'élément d'accouplement (84) interagit avec l'élément de contre-fixation (60) pour ajuster ce dernier entre la position de fixation et la position de relâchement, de préférence par l'intermédiaire d'au moins un élément d'actionnement (67), et/ou **en ce que** l'élément d'accouplement (84) est précontraint dans une position de préparation à l'action.

8. Machine de travail du sol selon la revendication 2 et l'une des revendications 4 à 7,
**caractérisé en ce que** l'élément de poignée (74) est doté d'un premier dispositif de précontrainte (78) qui le précontraint dans sa position de repos, et **en ce que** l'élément de contre-fixation (60) est doté d'un deuxième dispositif de précontrainte (66) qui le précontraint dans sa position de relâchement et qui est efficace indépendamment du premier dispositif de précontrainte (78).

9. Machine de travail du sol selon l'une des revendications précédentes,
**caractérisé en ce que** l'unité porte/fenêtre de cabine de commande (19) est supportée de manière pivotante sur un côté de liaison pivot (24) du cadre de la porte/fenêtre (22) autour d'un axe de pivotement (A) et/ou peut être verrouillée dans la position fermée au moyen d'une formation de verrouillage (31) par rapport au cadre de la porte/fenêtre (22) sur un côté de verrouillage (26) situé à une distance horizontale par rapport au côté de liaison pivot (24), et **en ce que** la formation de poignée (48) est disposée de manière décalée par rapport à un centre horizontal de porte/fenêtre horizontal (M_{H}) situé entre le côté de liaison pivot (24) et le côté de verrouillage (26) de l'unité porte/fenêtre de cabine de commande (19) dans la direction du côté de liaison pivot (24).

10. Machine de travail du sol selon la revendication 2 et la revendication 9,
**caractérisé en ce que** l'élément de contre-fixation (60) est disposé de manière décalée dans la zone du centre horizontal de porte/fenêtre (M_{H}) ou par rapport au centre horizontal de porte/fenêtre (M_{H}) en direction du côté de liaison pivot (24).

11. Machine de travail du sol selon la revendication 9 ou 10,
**caractérisé en ce que** la formation de verrouillage (31) comprend une poignée de porte/fenêtre (30) disposée de manière décalée par rapport au centre horizontal de porte/fenêtre (M_{H}) en direction du côté de verrouillage (26) et/ou une serrure de porte/fenêtre (28) disposée de manière décalée par rapport au centre horizontal de porte/fenêtre (M_{H}) en direction du côté de verrouillage (26).

12. Machine de travail du sol selon l'une des revendications précédentes,
**caractérisé en ce que** l'unité porte/fenêtre de cabine de commande (19) a un haut de porte/fenêtre (32) et un bas de porte/fenêtre (34) situés à une distance verticale du haut de porte/fenêtre (32), et **en ce que** la formation de poignée (48) est disposée de manière décalée par rapport à un centre vertical de porte/fenêtre (Mv) situé entre le haut de porte/fenêtre (32) et le bas de porte/fenêtre (34) dans la direction du haut de porte/fenêtre (32).

13. Machine de travail du sol selon la revendication 9 et la revendication 12,
**caractérisé en ce que** la formation de verrouillage est disposée de manière décalée dans la zone du centre vertical de porte/fenêtre (Mv) ou par rapport au centre vertical de porte/fenêtre (Mv) en direction du bas de porte/fenêtre (34).

14. Machine de travail du sol selon l'une des revendications précédentes,
**caractérisé en ce qu'**en position ouverte, l'unité porte/fenêtre de cabine de commande (19) est pivotée au maximum hors de la position fermée, et/ou **en ce que** l'unité porte/fenêtre de cabine de commande (19) peut pivoter entre la position fermée et la position ouverte avec un angle de pivotement de plus de 90°, de préférence de plus de 150°, de la manière la plus préférée d'environ 180°.

15. Machine de travail du sol selon l'une des revendications précédentes,
**caractérisé en ce qu'**une formation de maintien en position intermédiaire (36) est prévue pour maintenir l'unité porte/fenêtre de cabine de commande (19) dans une position intermédiaire entre la position ouverte et la position fermée.

16. Machine de travail du sol selon la revendication 15,
**caractérisé en ce que** le dispositif de maintien en position intermédiaire (36) comprend une unité de précontrainte (42) agissant sur l'unité porte/fenêtre de cabine de commande (19) en direction de la position ouverte et une butée de mouvement amovible (41).

17. Machine de travail du sol selon l'une des revendications précédentes,
**caractérisé en ce que** l'unité porte/fenêtre de cabine de commande (19) comprend une partie porte/fenêtre inférieure (52) et une partie porte/fenêtre supérieure (50) qui peut être pivotée indépendamment de la partie porte/fenêtre inférieure (52) entre la position fermée et la position ouverte et **en ce que** la formation de poignée (48) est prévue sur la partie porte/fenêtre supérieure (50).
